Europäisches Patentamt

European Patent Office

Office européen des brevets

(11) Publication number: **0 061 232**
**B1**

# (12) EUROPEAN PATENT SPECIFICATION

(45) Date of publication of patent specification: **30.09.87**

(51) Int. Cl.⁴: **B 01 D 1/00, A 23 G 7/00**

(21) Application number: **82300580.6**

(22) Date of filing: **05.02.82**

(54) Evaporation apparatus and method of evaporating a liquid mass.

(30) Priority: **06.02.81 GB 8103679**

(43) Date of publication of application:
**29.09.82 Bulletin 82/39**

(45) Publication of the grant of the patent:
**30.09.87 Bulletin 87/40**

(84) Designated Contracting States:
**AT BE CH DE FR GB IT LI LU NL SE**

(56) References cited:
**DE-A-2 405 807**
**DE-A-2 430 918**
**DE-C-2 318 949**
**US-A-1 692 022**
**US-A-3 739 711**

(73) Proprietor: **Yorkshire Process Plant Limited**
**P.O. Box 63**
**GB-York Y03 8TH (GB)**

(72) Inventor: **Paget, Anthony John**
**75 Oaken Grove**
**Haxby North Yorkshire (GB)**

(74) Representative: **Stanley, David William**
**APPLEYARD LEES & CO. 15 Clare Road Halifax**
**West Yorkshire HX1 2HY (GB)**

Courier Press, Leamington Spa, England.

## Description

This invention relates to an apparatus for the continuous evaporation and cooking of a liquid confectionery mass and to the use of such an apparatus for continuously cooking confectionery. It is particularly although not exclusively concerned with the preparation of toffee and like confectionery.

The preparation of high quality toffee presents special problems which are not generally encountered in the preparation of other confectionery. One reason for this is the presence in toffee of sticky milk protein, which is very susceptible to burning. Also, the ingredients of a toffee mix have to be continuously evaporated during the cooking process, in order to obtain particularly fine flavours and consistency. Furthermore, the differing ingredients such as fat and sugar have to be thoroughly mixed.

It is probably still true that one of the most reliable ways of making high quality toffee is to boil the toffee ingredients in batches, in open containers (usually of copper). However, although excellent results may be obtained, such traditional methods do not lend themselves readily to mass production of toffee. The filling and emptying of the open vessels for subsequent batches is rather time consuming. A continuous process of toffee would be much more cost effective.

Various apparatuses and methods are known for the production of confectionery by continuous processes. These generally involve the continuous feeding of the confectionery ingredients (known as a premix) through a cooking vessel, where the ingredients are heated. However, most known apparatuses and methods are unsuitable for the production of toffee, because they do not provide sufficient agitation of the ingredients in the cooking vessel (such that the sticky milk protein tends to stick to the heat transfer surfaces thereof, and burn). Moreover, heating is often carried out in such a manner as to prevent effective evaporation of the ingredients until they are about to be discharged, when a "flash" evaporation may take place. Such flash evaporation is quite unsuitable for toffee. Although some known apparatus may be used to produce toffee, the toffee generally is not of a very high quality, the apparatus being rather unsuitable to provide the necessary cooking action and fine control of the necessary parameters.

In U.S. Patent specification 3739711 (Nieblach), there is disclosed an apparatus for the continuous production of toffee. A toffee premix is fed into the bottom of a closed vessel, in which the premix is heated and stirred. The premix rises up the closed vessel until it overflows into a discharge pipe in the centre of the vessel. The partly cooked toffee then flows down the discharge pipe into an "after caramelisation pot" below the main closed vessel. The toffee premix is fed in, and the toffee is discharged, in a continuous process.

The above described apparatus has had a limited degree of success for the continuous production of toffee. However, we have found that this apparatus is not capable of providing high quality toffee, similar to the quality of toffees produced in the traditional batch processing manner. This is because the apparatus cannot provide a sufficiently vigorous and turbulent agitation of the premix in the closed vessel. As a result, the evaporation of the premix ingredients is limited, as is the degree of mixing, and the degree of heat transfer from the heat transfer surface of the closed vessel. The known apparatus is inherently unsuitable for vigorous and turbulent agitation of the premix, because of the positioning of the discharge pipe in the centre of the closed vessel. If the agitation means (comprising a rotary stirrer) were operated at high speed, the premix would be driven away from the discharge pipe, rather than towards it.

Preferred embodiments of the present invention aim to provide methods of evaporating a toffee premix, and apparatus therefor, which may produce toffee in a continuous process, both at a higher rate and of a higher quality than has been possible before.

The preferred embodiments of the invention are based upon the principle which we have discovered, that the success of toffee production, on a continuous basis, depends very much upon the mixing of the premix being vigorous and turbulent. In this way, the various phases present in a premix during cooking may be thoroughly mixed, and the necessary evaporation can be as full as possible, to give toffee of the finest consistency and flavour. Also, heat transfer between the premix and heat transfer surfaces of a cooking vessel may be improved, so that the toffee can be cooked at a higher rate.

According to a first aspect of the present invention, there is provided an apparatus for the continuous evaporation and cooking of a liquid confectionery mass comprising a closed vessel, an inlet to the vessel, an outlet of the vessel, higher than the inlet, heat supply means for supplying heat to a heat transfer surface of the vessel, means for withdrawing evaporated moisture from the vessel, and agitation means for agitating a liquid mass in the vessel, characterised in that the outlet is at or towards one side of the vessel and the shape, disposition and speed of rotation of the agitation means are such as to cause turbulent mixing of the liquid mass in the vessel and form the mass into a vortex, the extremities of which are urged towards the outlet.

In use of such apparatus, use is made of the vortex, to drive the liquid mass towards the outlet. Thus, the agitation can be as vigorous and turbulent as required, without driving the liquid mass away from the outlet.

According to a second aspect of the present invention, there is provided use of an apparatus according to the first aspect of the invention for continuously cooking confectionery comprising the steps of continuously introducing a liquid confectionery mass through the inlet into the vessel, agitating said mass in the vessel, supplying heat to the heat transfer surface of the vessel in contact with said mass so as to evaporate moisture in said mass and to cook said mass as it travels progressively up the vessel from said inlet to the outlet which is disposed at a higher level than said inlet, withdrawing such evaporated moisture from the vessel and continuously discharging the cooked liquid mass from said outlet, wherein said liquid mass is agitated in the vessel by the agitation means in such manner as to cause turbulent mixing thereof and to form said mass into a vortex the extremities of which are urged towards said outlet.

Further optional features of the invention and advantages of preferred embodiments thereof will be apparent from the following description, which is given by way of example only, with reference to the accompanying diagrammatic drawings, in which:

Figure 1 is a diagrammatic side elevation of an evaporation apparatus embodying the invention, shown in part section;

Figure 2 is a part view of an apparatus which is similar to that of Figure 1, but which has been modified; and

Figure 3 is a part view of another evaporation apparatus which is similar to that of Figure 1, but which has been modified.

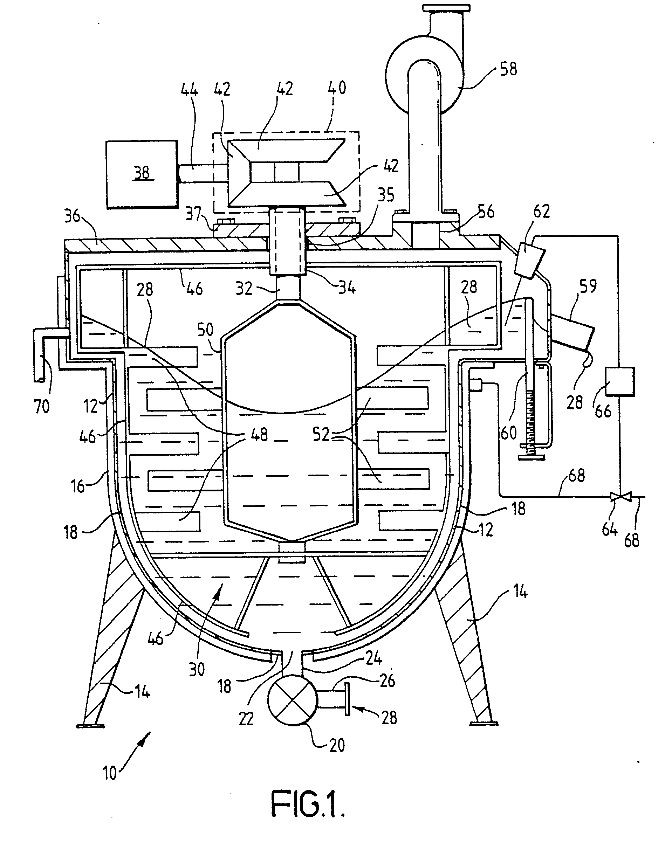

In Figure 1, the evaporation apparatus is indicated generally at 10 and comprises a substantially hemispherical closed stainless steel vessel 12 which is supported above the ground level on legs 14 with the dome of the vessel 12 lying adjacent to the ground.

A heating jacket 16 is secured around the outer periphery of the vessel 12 and steam (not shown) is arranged to pass through the jacket 16 to heat the side and lower walls 18 of the vessel 12 connected thereto.

A reversible metering pump 20 is coupled to an opening 22 formed through the base of the vessel 12 by means of a connecting pipe 24. The pump 20 is also connected by means of a conduit 26 to a supply of ingredients (not shown) for use in the manufacture of toffee. The ingredients (not shown) are added together and mixed in a holding tank (not shown) to give a premixed liquor 28 which is arranged to be continuously fed from the holding tank (not shown) through the conduit 26 on operation of the metering pump 20 in one sense, liquid 28 then passing through the metering pump 20, the connecting pipe 24 and the opening 22 into the base of the vessel 12 at a rate determined by the operating speed of the metering pump. The operating speed of the metering pump 20 can be adjusted to regulate the rate at which the liquor 28 is fed to the vessel 12. The metering pump 20 can also be reversed and operated in the opposite sense to that already mentioned, the pump 20 then being arranged to draw liquor 28 from the base of the vessel 12 through the connecting pipe 24 in order to discharge the liquor 28 from the vessel 12.

A paddle stirrer 30 is mounted within the vessel 12 and the drive shaft 32 and a drive sleeve 34 of the stirrer 30 each extend downwardly from a gearbox 40 through a hole 35 formed in an upper wall 36 of the vessel 12 and are each arranged to be rotated by a variable speed motor 38 *via* the gear box 40. The shaft 32 and the sleeve 34 are journalled within the gearbox 40 to permit rotation of the shaft 32 and the sleeve 34 relatively to the gear box. A flange 37 of the gear box 40 is bolted to the upper wall 36 once the shaft 32 and the sleeve 34 have been inserted through the hole 35 so that the gear box 40 is rigidly secured to the vessel 12.

The gear box 40 incorporates three bevel gear wheels 42, a first of which is secured to a drive shaft 44 of the motor 38, a second of which is secured to the free end of the shaft 32, the third gear wheel being secured to the free end of the sleeve 34. The first gear wheel 42 is in driving engagement with both the second and the third gear wheels 42 but is arranged to drive the second gear wheel in one sense and the third gear wheel in the opposite sense so that when the motor is energised the shaft 32 and the sleeve 34 are driven by the gear box 40 in opposite rotational directions. The sleeve 34 is secured to a framework 46 arranged around the inner periphery of the vessel 12 and a first set of paddles 48 extends horizontally inwardly towards the centre of the vessel 12. The shaft 32 is secured to an inner framework 50 rotatably mounted within the vessel 12 substantially on the centre line thereof. A second set of paddles 52 extend horizontally outwardly from the inner framework towards the side walls of the vessel 12. Each paddle of the second set of paddles 52 is arranged to pass between an adjacent pair of paddles of the first set of paddles 48 when the shaft 32 and the sleeve 34 are driven on energisation of the motor 38, as previously described. It will be appreciated that the framework 46 and its first set of paddles 48 rotate in an opposite sense to the inner framework 50 and its second set of paddles 52 during energisation of the motor 38. The speed of counter rotation of the first and second set of paddles 48 and 52 can be varied by altering the speed of the motor 38. The two sets of paddles 48 and 52 are arranged to be driven at high speeds of up to 200 r.p.m. by the motor 38 and because the two sets of paddles are counter rotational one with respect to the other, they are arranged to provide vigorous and turbulent mixing of the liquor 28 supplied to the vessel 12. The paddles 48 and 52 afford portions of the stirrer 30 which are thick relative to the respective portions of the frameworks 50 as well as to the portion 46 below the paddles 48 and 52.

An opening 56 is formed through the upper wall 36 at one side of the vessel 12 and an extractor fan 58 coupled to the opening 56 is arranged to draw moisture and volatile matter from the vessel 2 through the opening 56 to enhance the evaporation of a fluid heated in the vessel 12.

An outlet tube 59 extends outwardly and downwardly at an angle from the upper side wall of the vessel 12 adjacent to the opening 56. A weir 60 is provided within the vessel 12 adjacent to the outlet tube 59 and the height of the weir is adjustable relatively to the outlet tube 59. Variations in the height of the weir provide an adjustment of the retention time of the liquor 28 in the vessel 12. Thus, if the weir 60 is set at a relatively low height with respect to the outlet tube 59, the liquor 28 is easily able to flow over the weir 60 to the outlet tube and therefore has a corresponding shorter retention time in the vessel 12 than a liquor which has to rise up over the weir 60 when the latter is set at a greater height with respect to the outlet tube. The rate at which the liquor 28 is fed through the vessel 12 will, of course, be dependent on the rate at which the liquor 28 is pumped into the vessel by the metering pump 20, but when the pump 20 is arranged to deliver liquor to the vessel 12 at a constant rate, the adjustment of the height of the weir 60 provides a fine adjustment of the retention time of the liquor in the vessel 12. A fine control of the retention time of the liquor 28 in the vessel 12 is of importance since the amount of heat supplied to the liquor, and the amount of moisture evaporated from the liquor are all dependent on the retention time of the liquor in the vessel and those two factors affect the final flavour, colouring, texture and other properties of the toffee produced from the liquor 28.

A temperature sensing probe 62 is secured through the side wall of the vessel adjacent to the outlet tube 59 and the probe 62 is arranged to monitor the temperature of the liquor 28 as it is discharged from the vessel through the outlet tube 59. The probe 62 is connected to a modulating flow valve 64 via a transducer 66, and the valve 64 is connected to the pipe work 68 supplying steam (not shown) to the heating jacket 16. The probe 62, the valve 64 and the transducer 66 form a control loop with the liquor 28 fed through the vessel 12, whereby the amount of steam supplied to the heating jacket 16, and hence the amount of heat supplied to the vessel 12 and liquor 28, can be automatically controlled in respose to the temperature sensed by the probe 62. In operation the probe 62 monitors the temperature of the liquor 28 as it is discharged from the vessel 12 and sends a corresponding electrical signal to the transducer 66 which causes operation of the valve 64 in response to the signal received. Thus, if the temperature of the liquor 28 is sensed by the probe 62 to be too high the signal fed to the transducer 66 causes the transducer to initiate closure of the valve 64 to thereby restrict the amount of steam being supplied to the jacket 16 and hence reduces the heat supplied to the liquor 28 passing through the body of the vessel 12 to reduce the temperature of the liquor. Conversely, if the temperature sensed by the probe is too low, the electrical signal passed to the transducer 66 initiates opening of the valve 64 so that more steam is passed to the jacket 16 and more heat is supplied to the body of the liquor 28 in the vessel to raise the temperature of the liquor.

The signals fed to the transducer 66 will depend upon what optimum temperature is required for the liquor 28 as it is discharged from the vessel 12. Once the optimum temperature is chosen and the probe set accordingly, the probe will send no signal to the transducer once the liquor attains the optimum temperature as it is discharged from the vessel 12. Consequently, the valve 64 will not be operated and so a constant amount of heat will be able to pass through the valve to the heating jacket 16 so as to maintain the temperature of the liquor 28 discharged from the vessel at substantially the same value as the optimum temperature. However, any deviation in the temperature of the liquor sensed by the probe 62 from the optimum temperature will be controlled, as described above, by corresponding operation of the transducer 66 and the valve 64. In practice the temperature of the liquor at the outlet may vacillate initially but should soon settle down and approximate to the optimum temperature as the control exercised by the controller begins to take effect.

An inlet tube 70 is secured to the upper side wall of the vessel 12 on the opposite side thereof to the outlet tube 59. Ingredients, such as colouring or flavourings, can be added to the liquor 28 in the vessel 12 via the inlet tube 70 so that the ingredients can be mixed with the liquor prior to the discharge of the liquor from the vessel 12.

In use, liquor 28 is drawn off from the holding tank (not shown) by the metering pump 20 and fed at a constant rate through the connecting pipe 24 to the vessel 12. Steam (not shown) is supplied via the pipework 68 to the heating jacket 16, and the motor 38 is energised to drive the two sets of paddles 48 and 52 around in opposite directions within the vessel 12. As more and more liquor 28 is fed to the vessel the level of the liquor 28 rises up the sides of the vessel 12. The two sets of paddles 48 and 52 which are driven at between 50 and 200 r.p.m. by the motor 38, ensure turbulent mixing of the liquor 28 which as a result of the mixing action adopts a whirlpool or vortex configuration, in which its free surface is convexed downwardly as clearly shown by the profile shown in chain-dotted lines in Figure 1. Hence, the level of the liquor in contact with the side walls of the vessel is raised by the mixing action. The paddles 48 and 52 not only push the liquor out towards the side of the vessel 12 but also tend to raise the liquor up as it passes through the vessel to aid the discharge of the liquor from the vessel over the weir 60. Because the paddles 48 and 52 urge the liquor 28 into contact with the side walls of the vessel 12 which are themselves in contact with the steam (not shown) in the heating jacket 16 a good heat transfer rate between the steam and the liquor 28 is ensured through the side walls of the vessel 12. Moreover, the turbulent mixing action of the paddles 48 and 52 ensures that the liquor is thoroughly mixed so that a uniform temperature distribution is maintained within the body of the liquor as it passed through the vessel 12. As the liquor is heated and mixed within the vessel 12, moisture is evaporated from the liquor and is drawn off through the opening 56 by the extractor fan 58.

The moisture content of the liquor, the amount of heat supplied to the liquor, the mixing of the liquor and the final temperature attained by the liquor after being processed by the apparatus 10 are all factors which can have a great effect on such things as the colour, flavour, texture, and odour of the toffee produced from the liquor 28. Thus, a great deal of control is needed on these factors to ensure a high standard of quality as demanded by the best toffee houses. The turbulent mixing provided by the paddles 48 and 52 not only ensures a uniform heating of the liquor 28 as it passes through the vessel 12 and therefore a uniform cooking rate of the liquor, but also gives full mixing and creaming of the liquor to assist its final flavour and texture, and also assists the rate of evaporation of moisture from the liquor which can affect the final consistency of the toffee produced from the liquor. The apparatus 10 is capable of producing toffee of a quality substantially equal to that produced in a traditional batch process, and we have constructed an apparatus such as 10 which will evaporate and cook one ton of toffee per hour in a continuous process. We have been able to achieve a heat transfer rate of 116 Btu (sq. ft.) (°F.) (hr.) to the liquor, as compared with a rate of 50 Btu/(sq. ft.) (°F.) (hr.) in previously known apparatus, due to our improved mixing (1 Btu/(sq. ft), (°F.) (hr.)$=4.88 \times 4.19 \times 10^3$ J/(m$^2$) (°C) (h). However another important advantage is that the apparatus 10 can be used for the batch manufacture of toffee, and in that case the metering pump 20 is operated to supply a measured charge of liquor 28 to the vessel 12. The opening 22 and the outlet of the vessel are then closed and the steam is then supplied to the heating jacket 16. The motor 38 is energised to cause counter rotation of the first and second sets of paddles 48 and 52 so as to stir the liquor 28 which is cooked and evaporated within the vessel for a predetermined length of time. When the liquor 28 has been fully processed the opening 22 at the base of the vessel 12 can be opened and the pump 20 operated in the reverse sense to draw off the liquor 28 from the vessel 12 and pump it to a suitable container (not shown) either via the conduit 26 or a similar duct coupled to the pump 20 (not shown). During the batch processing of the liquor 28 within the vessel 12, any ingredients which need to be added to the liquor such as, for example, flavouring and colouring matter can be added to the liquor in the vessel via the inlet tube 70. The control loop can also be exercised during the batch processing of the liquor 28 in order to control the heat supplied to the batch of liquor in the vessel and the temperature reached by that liquor. Also, a batch of liquor 28 could be supplied to the vessel through a hole (not shown) in the upper wall of the vessel 12, the hole normally being closed during continuous operation of the vessel 12.

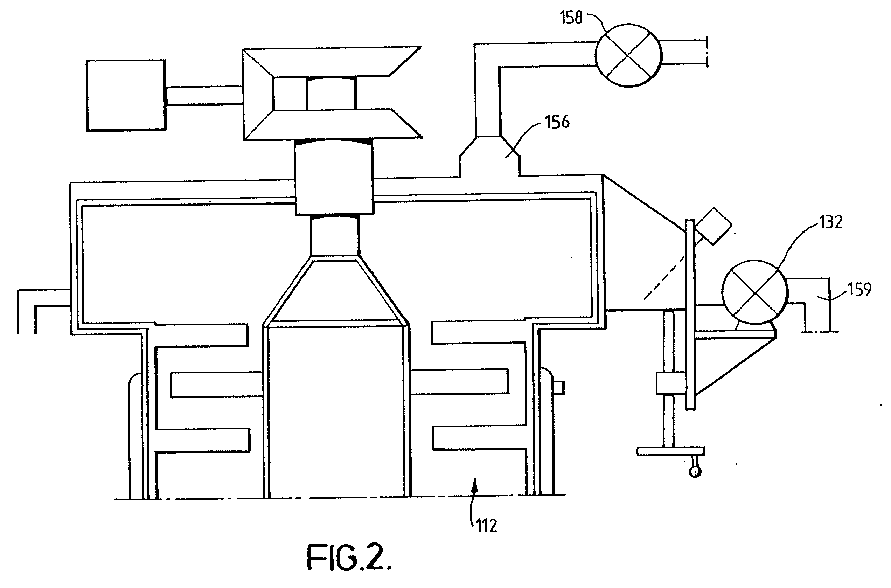

The extractor fan 58 could be used in reverse if required to apply pressure to the liquor within the vessel 12 so that the heating of the liquor 28 is carried out under pressure, or a pump could be coupled to the extraction duct to increase or decrease the pressure in the vessel 12. Thus, for example, a vacuum pump could be connected to the extraction duct to reduce the pressure in the vessel 12 during the continuous processing of liquor 28 passed therethrough, and the liquor could be continuously removed from the vessel 12 via a pump, a valve or a trap. Similarly, a pump could be connected to the extraction duct for increasing the pressure within the vessel 12. Figure 2 shows such a modified apparatus, in which there is provided a pump 158 connected to an outlet 156 to reduce the pressure within a vessel 12, and a pump 132 is provided to remove liquor from the vessel 112 via an outlet tube 159. In other respects, the apparatus of Figure 2 is generally the same as the apparatus of Figure 1.

Alternative embodiments of the invention are also envisaged. Thus, for example, the vessel 12 could be of a shape other than hemispherical, for example, the vessel 12 could be cylindrical or conical, and the vessel 12 could be formed of materials other than stainless steel such as, for example, copper or alloy steel. The paddle stirrer 30 could be replaced by other agitation means which is designed to produce turbulent mixing of the liquor 28 within the vessel 12 and form the liquor 28 into a vortex.

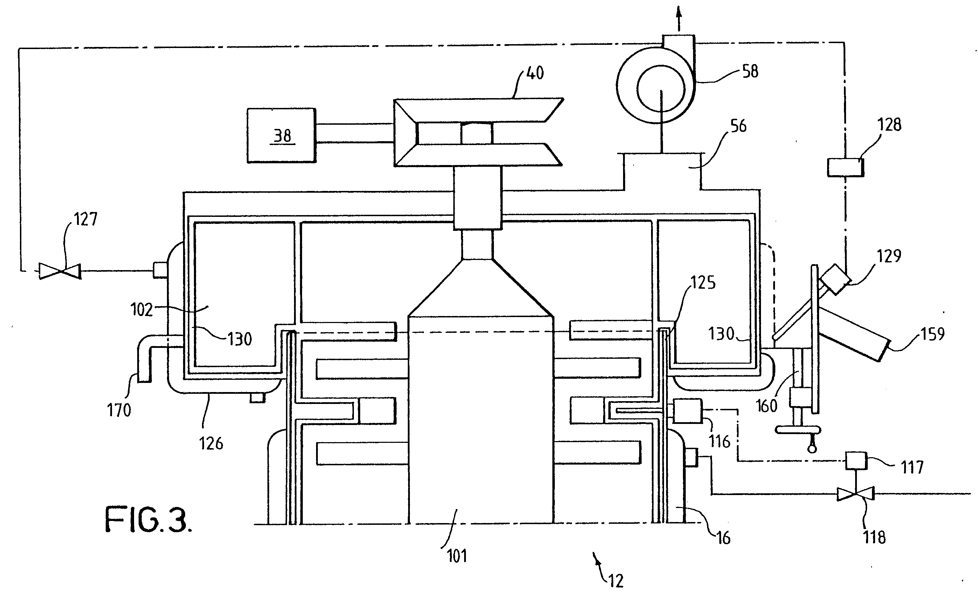

Instead of the liquor 28 overflowing the weir 60 and being discharged from the vessel 12 through the outlet tube 59, the liquor may pass over the weir 60 into an outlet holding reservoir prior to being discharged through an outlet tube connected to the reservoir. If required the reservoir could be agitated by the paddle stirrer 30 or a similar agitation means and the reservoir could also be heated by a steam jacket similar to the jacket 16. Control of the steam supplied to the jacket around the reservoir could be exercised by a control loop similar to the one connected to the heating jacket 16. Thus, the heating jacket 16 and the second heating jacket around the reservoir could be controlled independently of each other to finally control the heating of the liquor 28 both as it passes through the vessel 12 and as it overflows the weir 60 into the reservoir before being discharged from the apparatus 10. Figure 3 shows one example of such apparatus.

The apparatus shown in Figure 3 is generally similar to that shown in Figure 1, except that the vessel 12 is separated into a first zone 101 and a second zone 102. The first zone 101 correspond to the major part of the vessel 12 in Figure 1, being heated by a respective heating jacket 16 as before. However, in Figure 3, the first zone 101 is bounded by a weir 125, over which the extremities of the vortex formed by the agitation means flow, into the second zone 102. The second zone 102, formed concentrically around the first zone 101, has its own heating jacket 126, to which steam is supplied via a valve 127. The second zone 102 has its own agitation means 130 in the form of a simple stirring frame which is secured to the main agitation means of the first zone 101. An inlet tube 170 for colouring and flavouring ingredients leads to the second zone 102. An adjustable weir 160 and an outlet tube 159 are provided at the extremities of the second zone 102, in a similar manner to the apparatus of Figure 1. A temperature sensing probe 129 is connected to control the valve 127, *via* a transducer 128, in a manner similar to the heat supply control loop described above with reference to Figure 1. Furthermore, the first zone 101 is provided with its own temperature sensing probe 116 adjacent to the weir 125, the probe being connected to a transducer 117 and 118 to control the flow of steam to the heating jacket 16, as described with reference to Figure 1.

Thus, in the apparatus shown in Figure 3, the temperatures in the first and second zones 101 and 102 may be controlled to some extent independently of one another, to provide a two stage cooking operation of the liquor 28.

It will be understood that although the apparatus 10 was described above in relation to the preparation of toffee from the liquor 28, the apparatus 10 could be used to prepare other confectionery items such as caramel or the like.

In the illustrated apparatus 10, the framework 46 of the stirrers passes over the heat transfer surface 18, with a small gap therebetween. In use, the speed of the framework 46 causes local turbulence at its leading edges, which has the effect of continuously clearing the cooking liquor from the heat transfer surface 18, thereby to prevent burning.

## Claims

1. Apparatus for the continuous evaporation and cooking of a liquid confectionery mass comprising a closed vessel (12), an inlet (22) to the vessel, an outlet (59, 60) of the vessel, higher than the inlet, heat supply means (16) for supplying heat to a heat transfer surface (18) of the vessel, means (56, 58) for withdrawing evaporated moisture from the vessel, and agitation means (48, 52) for agitating a liquid mass (28) in the vessel, characterised in that the outlet (59, 60) is at or towards one side of the vessel (12) and the shape, disposition and speed of rotation of the agitation means (46, 48, 50, 52), are such as to cause turbulent mixing of the liquid mass (28) in the vessel and to form the mass into a vortex, the extremities of which are urged towards the outlet (59, 60).

2. Apparatus according to Claim 1, wherein the heating means comprises a steam jacket around the vessel.

3. Apparatus according to Claim 1 or 2, wherein the agitation means comprises counter rotating stirrers.

4. Apparatus according to Claim 1, 2 or 3, wherein the agitation means has upper (48, 52) and lower (46) portions which are relatively thick and thin respectively.

5. Apparatus according to Claim 1, 2, 3 or 4, wherein the level of the outlet in the vessel is adjustable.

6. Apparatus according to Claim 5, wherein the outlet comprises a weir (60) over which the liquid mass may flow and the height of which is adjustable.

7. Apparatus according to any preceding claim, including an ancillary inlet tube (70; 170) for adding ingredients into the vessel, at or adjacent the level of the outlet.

8. Apparatus according to any preceding claim, including temperature control means (62, 66) for monitoring the temperature of a liquid mass at or adjacent the outlet and regulating the heat supply means in dependence upon the monitored temperature.

9. Apparatus according to any preceding claim, wherein the vessel is divided into first (101) and second (102) zones (Fig. 3), the agitation means being provided in the first zone such that in use the extremities of the said vortex are urged towards the outlet *via* the said second zone.

10. Apparatus according to Claim 9, wherein the said second zone has its own agitation means (130) for the liquid mass.

11. Apparatus according to Claim 9 or 10, wherein the said second zone has its own heat supply means (126).

12. Apparatus according to Claim 11, wherein the said second zone has its own temperature control means (129, 128) for monitoring the temperature of the liquid mass at or adjacent the outlet and regulating the respective heat supply means in dependence upon the monitored temperature.

13. Apparatus according to any one of Claims 9 to 12, wherein the two zones are separated by a weir (125).

14. Apparatus according to Claim 7 and any one of Claims 9 to 13, wherein the said ancillary inlet tube (170) leads into the said second zone.

15. Apparatus according to any preceding claim, including means (158, Fig. 2) for varying the pressure within the vessel.

16. Apparatus according to any preceding claim, wherein said heat transfer surface extends substantially from said inlet to said outlet of the vessel.

17. Use of an apparatus according to any preceding claim for continuously cooking confectionery, comprising the steps of continuously introducing a liquid confectionery mass through the inlet (22) into the vessel (12), agitating said mass (28) in the vessel (12), supplying heat to the heat transfer surface (18) of the vessel (12) in contact with said mass (28) so as to evaporate moisture in said mass (28) and to cook said mass (20) as it travels progressively up the vessel (12) from said inlet (22) to the outlet (59, 60), withdrawing such evaporated moisture from the vessel (12) and continuously discharging the cooked liquid mass from said outlet (59, 60) wherein said liquid mass (28) is agitated in the vessel (12) by the agitation means (46, 48, 50, 52) in such manner as to cause turbulent mixing thereof and to form said mass (28) into a vortex the extremities of which are urged towards said outlet (59, 60).

18. Use according to Claim 17, including the step of adding further ingredients to the liquid mass at or adjacent the top of the vortex.

19. Use according to Claim 18, wherein said further ingredients comprise flavouring and/or colouring agents.

20. Use according to Claim 17, 18 or 19, including the step of monitoring the temperature of the liquid mass at the outlet and regulating the said supply of heat in dependence upon the monitored temperature.

## Patentansprüche

1. Vorrichtung zum kontinuierlichen Eindampfen und Kochen einer flüssigen Zuckermasse, mit einem geschlossenen Behälter (12), einem Einlaß (22) zum Behälter, einem Auslaß (59, 60) aus dem Behälter, der sich oberhalb des Einlasses befindet, einer Wärmezufuhreinrichtung (16) zum Zuführen von Wärme zu einer Wärmeübergangsfläche (18) des Behälters, mit Mitteln (56, 58) zum Abziehen verdampfter Flüssigkeit aus dem Behälter, und mit einem Rührorgan (48, 52) zum Umrühren flüssiger Mass (28) im Behälter, dadurch gekennzeichnet, daß der Auslaß (59, 60) an einer oder gegen eine Seite des Behälters (12) angeordnet und das Rührorgan von solcher Gestalt, Anordnung und Drehzahl ist, daß eine turbulente Durchmischung der flüssigen Masse (28) im Behälter erfolgt und die Masse in einen Wirbel überführt wird, dessen Enden zum Auslaß (59, 60) hin gedrängt werden.

2. Vorrichtung nach Anspruch 1, dadurch gekennzeichnet, daß die Wäremzufuhreinrichtung einen der Behälter umgebenden Dampfmantel umfaßt.

3. Vorrichtung nach Anspruch 1 oder 2, dadurch gekennzeichnet, daß das Rührorgan gegenläufige Rührer umfaßt.

4. Vorrichtung nach Anspruch 1, 2 oder 3, dadurch gekennzeichnet, daß das Rührorgan obere (48, 52) und untere (46) Teile aufweist, die relativ dick bzw. dünn sind.

5. Vorrichtung nach einem der Ansprüche 1—4, dadurch gekennzeichnet, daß die Höhe des Auslasses des Behälters einstellbar ist.

6. Vorrichtung nach Anspruch 5, dadurch gekennzeichnet, daß der Auslaß ein Überlaufwehr (60) aufweist, über welches die flüssige Masse hinwegfließt und dessen Höhe einstellbar ist.

7. Vorrichtung nach einem der vorausgegangenen Ansprüche, dadurch gekennzeichnet, daß ein Hilfseinlaßrohr (70, 170) zum Hinzugeben von Zutaten in das Gefäß vorgesehen ist, und zwar auf der Höhe des Auslasses oder im Bereich des Auslasses.

8. Vorrichtung nach einem der vorausgegangenen Ansprüche, dadurch gekennzeichnet, daß eine Temperaturregeleinrichtung (62, 66) zum Überwachen der Temperatur einer flüssigen Masse am oder im Bereich des Auslasses und zum Einstellen der Wärmezufuhreinrichtung in Abhängigkeit von der überwachten Temperatur vorgesehen ist.

9. Vorrichtung nach einem der vorausgegangenen Ansprüche, dadurch gekennzeichnet, daß der Behälter in eine erste (101) und eine zweite (102) Zone unterteilt ist, und daß das Rührorgan in der ersten Zone angeordnet ist, derart, daß die Enden des genannten Wirbels während des Betriebes über die genannte zweite Zone zum Auslaß hin gedrängt werden.

10. Vorrichtung nach Anspruch 9, dadurch gekennzeichnet, daß die zweite Zone ein eigenes Rührorgan (130) für die flüssige Masse hat.

11. Vorrichtung nach Anspruch 9 oder 10, dadurch gekennzeichnet, daß die zweite Zone eine eigene Wärmezufuhreinrichtung (126) hat.

12. Vorrichtung nach Anspruch 11, dadurch gekennzeichnet, daß die zweite Zone eine eigene Temperaturregeleinrichtung (129, 128) zum Erfassen der Temperatur der flüssigen Masse am oder im Bereich des Auslasses und zum Regeln der jeweiligen Wärmezufuhreinrichtung in Abhängigkeit von der erfaßten Temperatur besitzt.

13. Vorrichtung nach einem der Ansprüche 9—12, dadurch gekennzeichnet, daß die beiden Zonen durch ein Wehr (125) voneinander getrennt sind.

14. Vorrichtung nach Anspruch 7 und nach einem der Ansprüche 9—13, dadurch gekennzeichnet, daß das Hilfseinlaßrohr (170) in der zweiten Zone mündet.

15. Vorrichtung nach einem der vorausgegangenen Ansprüche, dadurch gekennzeichnet, daß Mittel (158, 172) zum Verändern des Druckes im Behälter vorgesehen sind.

16. Vorrichtung nach einem der vorausgegangenen Ansprüche, dadurch gekennzeichnet, daß die Wärmeübergangsfläche sich im wesentlichen vom Einlaß zum Auslaß des Behälters erstreckt.

17. Anwendung an einer Vorrichtung gemäß einem der vorausgegangenen Ansprüche zum kontinuierlichen Kochen von Zuckermasse, umfassend die Verfahrensschritte des kontinuierlichen Einführens einer flüssigen Zuckermasse durch den Einlaß (22) in den Behälter (12), des Umrührens dieser Masse (28) im Behälter (12), des Zuführens von Wärme zur Wärmeübergangsfläche (18) des Behälters (12) in Berührung mit der Masse (28), um Flüssigkeit aus der Masse (28) zu verdampfen und die Masse (20) zu kochen, wenn diese progressiv vom Einlaß (22) zum Auslaß (59, 60) im Behälter (12) aufsteigt, des Abziehens dieser verdampften Flüssigkeit aus dem Behälter (12) und des kontinuierlichen Entfernens der gekochten flüssigen Masse aus dem Auslaß (59, 60), wobei die flüssige Masse (28) im Behälter (12) durch das Rührorgan (46, 48, 50, 52) derart umgerührt wird, daß hieraus eine turbulente Mischung entsteht, und daß aus der Masse (28) ein Wirbel gebildet wird, dessen Enden zum Auslaß (59, 60) hingedrängt werden.

18. Anwendung nach Anspruch 17, dadurch gekennzeichnet, daß weitere Zuschlagstoffe zur flüssigen Masse im oberen Bereich des Wirbels zugegeben werden.

19. Anwendung nach Anspruch 18, dadurch gekennzeichnet, daß die weiteren Zuschlagstoffe Aromastoffe oder Farbstoffe sind.

20. Anwendung nach einem der Ansprüche 17, 18 oder 19, dadurch gekennzeichnet, daß die Temperatur der flüssigen Masse am Auslaß erfaßt und daß die Wärmezufuhr in Abhängigkeit von der erfaßten Temperatur eingestellt wird.

## Revendications

1. Appareil pour l'évaporation et la cuisson en continu d'une masse liquide de produit de confiserie, comprenant une cuve fermée (12), une entrée (22) débouchant dans la cuve, une sortie (59, 60) partant de la cuve et placée plus haut que l'entrée, des moyens d'apport de chaleur (16) pour fournir des calories à une surface de transfert thermique (18) de la cuve, des moyens (56, 58) pour extraire de la cuve l'humidité produite par évaporation, et des moyens d'agitation (48, 52) pour agiter une masse liquide (28) dans la cuve, caractérisé en ce que la sortie (59, 60) se trouve sur ou vers un côté de la cuve (12) et la forme, la disposition et la vitesse de rotation des moyens d'agitation (46, 48, 50, 52) sont telles qu'elles provoquent un mélange turbulent de la masse liquide (28) dans la cuve et mettent la masse sous la forme d'un tourbillon dont les extrémités sont refoulées vers la sortie (59, 60).

2. Appareil selon la revendication 1, dans lequel les moyens de chauffage comprennent une chemise à vapeur entourant la cuve.

3. Appareil selon la revendication 1 ou 2, dans lequel les moyens d'agitation comprennent des agitateurs rotatifs à mouvement contraire.

4. Appareil selon la revendication 1, 2 ou 3, dans lequel les moyens d'agitation comportent une partie supérieure (48, 52) et une partie inférieure (46) qui sont respectivement relativement épaisse et mince.

5. Appareil selon la revendication 1, 2, 3 ou 4, dans lequel la position en hauteur de la sortie de la cuve est réglable.

6. Appareil selon la revendication 5, dans lequel la sortie comprend un déversoir (60) au-dessus duquel la masse liquide peut s'écouler et dont la hauteur peut être réglée.

7. Appareil selon l'une quelconque des revendications précédentes, comprenant un tube d'admission auxiliaire (70; 170) pour l'adjonction d'ingrédients dans la cuve, ce tube étant situé au niveau ou à proximité de la sortie.

8. Appareil selon l'une quelconque des revendications précédentes, comprenant des moyens de commande de température (62, 66) destinés à contrôler la température d'une masse liquide au niveau ou à proximité de la sortie et à régler les moyens d'apport de chaleur en fonction de la température contrôlée.

9. Appareil selon l'une quelconque des revendications précédentes, dans lequel la cuve est subdivisée en une première (101) et une seconde (102) zones (Fig. 3), les moyens d'agitation étant placés dans la première zone de telle manière qu'en service, les extrémités dudit tourbillon soient refoulées vers la sortie en passant par ladite seconde zone.

10. Appareil selon la revendication 9, dans lequel ladite seconde zone possède ses propres moyens d'agitation (130) pour la masse liquide.

11. Appareil selon la revendication 9 ou 10, dans lequel ladite seconde zone possède ses propres moyens d'apport de chaleur (126).

12. Appareil selon la revendication 11, dans lequel ladite seconde zone possède ses propres moyens de commande de température (129, 128) pour contrôler la température de la masse liquide au niveau ou à proximité de la sortie et régler les moyens d'apport de chaleur respectifs en fonction de la température contrôlée.

13. Appareil selon l'une quelconque des revendications 9 à 12, dans lequel les deux zones sont séparées par un déversoir (125).

14. Appareil selon la revendication 7 et l'une quelconque des revendications 9 à 13, dans lequel ledit tube d'admission auxiliaire (170) aboutit dans ladite seconde zone.

15. Appareil selon l'une quelconque des revendications précédentes, comprenant des moyens (158, 172) pour faire varier la pression à l'intérieur de la cuve.

16. Appareil selon l'une quelconque des revendications précédentes, dans lequel ladite surface de transfert thermique s'étend sensiblement de ladite entrée à ladite sortie de la cuve.

17. Utilisation d'un appareil conforme à l'une quelconque des revendications précédentes, en vue de la cuisson continue de confiseries, comprenant les étapes consistant à introduire en continu une masse liquide de produit de confiserie dans la cuve (12) à travers l'entrée (22), à agiter ladite masse (28) dans la cuve (12), à fournir de la chaleur à la surface de transfert thermique (18) de la cuve (12) en contact avec ladite masse (28) de façon à éliminer par évaporation l'humidité présente dans ladite masse (28) et à cuire ladite masse (20) au fur et à mesure qu'elle migre en progressant vers le haut de la cuve (12), depuis ladite entrée (22) jusqu'à ladite sortie (59, 60), à extraire de la cuve (12) ladite humidité produite par évaporation et à évacuer en continu la masse liquide cuite par ladite sortie (59, 60), ladite masse de liquide (28) étant agitée dans la cuve (12) par les moyens d'agitation (46, 48, 50, 52) d'une manière telle à provoquer un mélange turbulent de ladite masse et à mettre ladite masse (28) sous la forme d'un tourbillon dont les extrémités sont refoulées vers ladite sortie (59, 60).

18. Utilisation selon la revendication 17, comprenant l'étape d'adjonction d'ingrédients supplémentaires dans la masse liquide au sommet ou à proximité du sommet du tourbillon.

19. Utilisation selon la revendication 18, dans lequel lesdits ingrédients supplémentaires comprennent des agents aromatisants et/ou des agents colorants.

20. Utilisation selon la revendication 17, 18 ou 19, comprenant l'étape de contrôle de la température de la masse liquide au niveau de la sortie et de réglage dudit apport de chaleur en fonction de la température contrôlée.

FIG.1.

0 061 232

FIG.2.

FIG.3.

0 061 232